# EUROPEAN PATENT APPLICATION

(11) **EP 4 112 360 A1**
(43) Date of publication of application: **04.01.2023**
(21) Application number: 21183072.4
(22) Date of filing: 01.07.2021
(51) Int. Cl.: B60L 53/00, B60L 53/30

(54) **SYSTEM FOR CHARGING AN ENERGY STORAGE OF AN ELECTRICALLY DRIVEN VEHICLE, METHOD AND PROGRAM CODE**

(71) Applicant: Vestel Elektronik Sanayi ve Ticaret A.S., 45030 Manisa (TR)
(72) Inventor: YALIN, Nevzat, 45030 Manisa (TR); KAHYAOGLU, Mert, 45030 Manisa (TR)
(74) Representative: Kehl, Ascherl, Liebhoff & Ettmayr Patentanwälte Partnerschaft mbB

(57) **Abstract**

The present disclosure provides a machine readable program code (112) for a mobile device (110), a method for transferring data from a charging station to a vehicle and a System (100) for charging an energy storage of an electrically driven vehicle, comprising a charging station (101) without a display screen for suppling power to the energy storage comprising an optical communication interface (104) and a control unit (102), whereas the optical communication interface (104) comprises a plurality of LEDs (105), whereas the plurality of LEDs (105) are controllable via the control unit (102), whereas the control unit (102) is configured to provide data encoding control signals to the optical communication interface (104), whereas the optical communication interface (104) is configured to emit optical signals via the LEDs (105) based on the received control signals, further comprising a mobile device (110) with a detector (111) to detect the optical signals, comprising program code (112) enabling the mobile device (110) to receive and decode the optical signals to derive the underlying data, whereas the mobile device (110) is connectable with the electrically driven vehicle (120), whereas the mobile device (110) is configured to transmit the derived data to the vehicle (120) connected to the mobile device (110), and further comprising the vehicle (120) configured to provide the received data via a user interface (121) of the vehicle (120), especially on a display or a screen.

## Description

### TECHNICAL FIELD

The disclosure relates to a system for charging an energy storage of an electrically driven vehicle, a method for transferring data from a charging station to a vehicle and

### BACKGROUND

The invention concerns the technical field of charging stations and its communication with a user or a potential user of the charging station.

Interaction between a charging station and a user is of importance as data between the charging station and the user needs to be exchanged, if a charging station shall be used. For such purpose, there are charging stations that comprise screens, e.g. touchscreens, to communicate with the user. For example, the charging station provides technical information, payment information relating to the charging process or information regarding the identification of the charging station.

However, such screens rise problems when used under outdoor conditions. These screens need to be protected from the rough environment, e.g. water, dust, mechanical stress, UV radiation, etc. and require high maintenance efforts. In consequence screens for displaying information as part of charging stations located outdoor expensive and also consume additional energy, when not in use. So, display screens for charging stations exposed to outdoor conditions should be avoided, if possible.

There have been ideas how communication between a charging station without a display screen can be provided, which can reduce the disadvantages mentioned above.

E.g. CN 109784120A proposes an optical code generating device, a light-sensitive data interaction method, an image acquisition device, a mobile terminal and a vehicle toll system. The optical code generation device includes: a controller, a pulsed light source, and a light homogenizer; the controller is used to receive the information to be processed, generate a corresponding control signal according to the information to be processed, and send the control signal to the pulsed light source; the pulsed light source can emit at least one colored light, used to emit light in a predetermined pattern according to the control signal from the controller; the homogenizer is set in the direction of the pulsed light source, used to convert the light emitted by the pulsed light source into an image capture device with rolling shutter exposure function the collected optical code, so that the image collecting device can obtain the information to be processed through the optical code. By applying this technical solution, it is possible to display dynamic optical barcodes without high-cost hardware such as displays, and to realize rapid and long-distance information transmission in different environments.

It is object of the invention to provide an improved communication between a charging station without display screen for an electrically driven vehicle and a user.

### SUMMARY

The above stated problem is solved by the features of the independent claims. It is understood, that independent claims of a claim category may be formed in analogy to the dependent claims of another claim category.

Further embodiments of the present disclosure are subject of the further dependent claims and of the following description, referring to the drawings.

Accordingly, it is provided a system for charging an energy storage of an electrically driven vehicle, comprising a charging station without a display screen for suppling power to the energy storage comprising an optical communication interface and a control unit, whereas the optical communication interface comprises a plurality of LEDs, whereas the plurality of LEDs are controllable via the control unit, whereas the control unit is configured to provide data encoding control signals to the optical communication interface, whereas the optical communication is configured to emit optical signals via the LEDs based on the received control signals, a mobile device with a detector to detect the optical signals, comprising program code enabling the mobile device to receive and decode the optical signals to derive the underlying data, whereas the mobile device is connectable with the electrically driven vehicle, whereas the mobile device is configured to transmit the derived data to the vehicle connected to the mobile device, whereas the vehicle is configured to provide the received data via a user interface of the vehicle, especially on a display or a screen.

A charging station is a station on which an energy storage of an electrically driven vehicle can be charged. The charging station is typically connected to a power grid and is enabled to provide electrical energy to the energy storage of the vehicle, especially as requested or required by the energy storage of the vehicle. The charging station does not comprise a display screen to communicate with user, i.e. a display to communicate via images or text via a user, e.g. a touch display.

The charging station however comprises a optical communication interface which is configured to emit optical signals by turning on and off a plurality of LEDs in different ways. By combination of on and off sequences for different LEDs or groups of LEDs comprised by the optical communication interface and/or by a combination of time periods of off and/or on phases of the plurality of LEDs and/or by a combination of different colors of LEDs or group of LEDs an interface is provided through which data can be transmitted as optical signals.

The optical signals emitted by the optical communication interface are triggered by control signals, which include the data to be transmitted via the optical communication interface. The data is encoded as optical signals, which can be detected and decoded by a mobile device, especially a mobile device of an user.

A mobile device is enabled to detect the optical signals and comprises therefore a detector. The mobile device is positioned relative to the optical communication interface such, that the detector is able to detect the optical signals. The detector can be a sensor suitable to detect respective optical signals, e.g. a camera of the mobile device.

The mobile device further comprises program code which enables the mobile device to detect and decode the detected optical signals and to derive the data underlying the optical signals. This means the mobile device is able to understand the information provided by the charging station via the optical signals emitted by the optical communication interface.

The mobile device, if not already connected with the vehicle, connects with the vehicle or requires the user to connect the mobile device with vehicle. After a connection between the mobile device and the vehicle is established the data derived from the optical signals can be transmitted to the vehicle.. This can happen in a wired way or, preferably, in a wireless way, e.g. via Bluetooth, WI-FI, WI-FI direct or other nearfield communication methods.

The vehicle is configured to provide this data on a user interface of the vehicle. All kind of user interface can be used to provide the data to the user. However the user interface needs to provide the data in form which can be understood by the user. The data can be provided by the user interface in an visual in an auditive way, e.g. by showing the data on a display or screen comprised by the vehicle or e.g. by providing the data as speech output via an acoustic interface, e.g. an assistant system or multimedia system of the vehicle.

This allows the user to perceive the data transmitted from the charging station in an easy and automatic way, whereas the user is not able to derive this data from the optical signals of the optical communication interface.

On the one hand a display for the charging station can be avoided on the other hand the user receives the data via the user interface of its vehicle in a high and used quality.

In a further embodiment of the system the plurality of LEDs are arranged in a frame-like shape. The LEDs are arranged such that the LEDs enclose an inner area, which is free of any LEDs and the LEDs are arranged as boundary of this inner area. So the frame-like shape can also described as ring-like shape. In this inner area enclosed by the LEDs other functional modules can be positioned, e.g. a payment module to read debit cards of a user. The frame-like shape respectively ring-like shape can have different forms, e.g. circular, elliptical, quadratic, rectangular, etc. So the optical communication interface comprising LEDs arranged in a frame-like shape can be efficiently combined with other functional modules of the charging station.

In another exemplary embodiment the frame-like shape is a rectangular shape with four linear sections, especially touching neighboring sections, forming together a rectangular shape, whereas each section comprises a plurality of LEDs. This is a shape that can be easily combined with other functional modules which can be positioned in the inner area of the rectangle free of LEDs.

The plurality of LEDs can also comprise a plurality of green lighting LEDs, a plurality of red lighting LEDs and a plurality of blue lighting LEDs. This allows a high variety of optical signals and therefore an efficient way to code data. Especially all sections of the frame-like rectangular shape can be lighted along at least 4/5 of their length. The plurality of LEDs are arranged such that each section can be lighted over at least 4/5 of their length in different colors, e.g. red, green and blue. The width of the frame-like shape is small compared to the outer dimensions of the rectangle, e.g. the width of the frame-like rectangular shape is at least 5 times smaller than the length of the two longer sections, especially 10 times smaller than the length of the two longer sections.

The light patterns created with the LEDs of the optical communication interface can be static of dynamic dependent on the control signals of the control unit. As information is provided which differs from user to user the optical signals vary at least in parts from user to user, dependent how many information is compressed into a light pattern. Especially the light patterns can change continuously in color and local distribution of color over the LED arrangement to communicate the data to the mobile device.

In a further embodiment of the system the control unit is configured to provide data in form of optical signals by generating altering LED light patterns, especially comprising at least two different colors, on the optical communication interface, especially on the frame-like shaped LED arrangement. This allows a high variety for the optical signals to be emitted via the optical communication interface and therefore a high variety of data that can be transmitted to the mobile device. In addition the optical signals for identical information provided by the charging station can vary from a first user to a next user which increases security of the communication between the optical communication interface and the mobile device.

In another embodiment of the system the control unit is configured to activate the optical communication interface if a presence of a mobile device or a user is detected. The presence of a mobile device or a user can be obtained by a proximity sensor, which detects if a mobile device or a user is positioned close to the charging station, especially close to the optical communication interface. If a mobile device or a user is detected the optical communication interface can be activated and starts emitting optical signals after a given time.

The optical communication interface can be configured to be inactive in case the mobile device or a user is located in a distance greater than a given distance threshold, whereas the optical communication interface is configured to be active in case the mobile device is located in a distance lower than the distance threshold.

The detection of a presence of a user or a mobile device is advantageous in terms of energy consumption of the optical communication interface. If the optical communication interface is deactivated in case no mobile device or user is detected and is activated, respectively waked up, if a mobile device or user is detected, the power consumption of the optical communication interface can be reduced or minimized.

In another embodiment of the system the optical communication interface is activated by a near field signal of the mobile device received by the charging station. A near field signal is a signal to be used for low distance or local communication. This mean the local range of the signal is below a certain threshold. Especially advantageous an NFC signal can be used as a detection of an NFC signal means that a mobile device is in direct vicinity of the charging station. The optical communication interface can e.g. be activated, if a near field communication signals or another near field signal, e.g. Bluetooth, WI-FI, iBeacon, RFID, etc, having a signal strength indicating a close vicinity to the charging station is received. Via the near field signal the mobile device and charging station can exchange further information, e.g. user information or information regarding the communication via the optical communication interface, e.g. encryption information.

In another embodiment of the system the mobile device is configured to transmit the data derived from the optical signals wirelessly, especially via Bluetooth, to the vehicle. The mobile device can further be configured to automatically connect to the vehicle and provide entitlement to access the user interface of the vehicle, if optical signals from the optical communication system are detected by the mobile device. This enables an automatic and easy transmission from the mobile device to the vehicle. The data transmitted from the mobile device to the vehicle can be encrypted allowing a secure information between the mobile device known to the vehicle and the vehicle known to the mobile device.

In another embodiment of the system the control unit is configured to encrypt the data to be transmitted via the optical signals whereas the mobile device is configured to decrypt the data before transmitting it to the vehicle. Encrypted shall mean that the data is additionally encoded with an encryption algorithm in addition to the encoding algorithm for emitting the optical signals. The encrypted data can be decrypted having access to the respective key and decryption algorithm. This allows a secure and protected communication of data from the charging station to the mobile device. Necessary information for encrypting and decrypting the data can transmitted from the mobile phone to the charging station via the near field signal.

In a further embodiment of the system the mobile device is a smartphone, whereas the optical signals are receivable via a camera of the smart phone. This is an advantageous embodiment as smart phones are common devices which have a high penetration in daily life and are available to most of the users of charging stations. No separate mobile device to implement the system is needed.

The problem is also solved via a method for transferring data from a charging station without a display screen to a user vehicle being part of a charging process at the charging station, whereas a control unit of the charging station provides data encoding control signals to an optical communication interface, whereas the optical communication interface emits optical signals based on the received control signals from the control unit, whereas a mobile device receives the optical signals and decodes the optical signals to derive the data, whereas the data is transmitted to the vehicle of the user, whereas the data is provided via an user interface of the vehicle.

In a further embodiment of the method whereas the data encoding control signals are encrypted via an encryption algorithm, and the received encrypted optical signals are decrypted by the mobile device applying a corresponding decryption algorithm. This allows a secure data transmission from the charging station to the mobile phone. Especially an end to end encryption can be used. The keys for encryption and decryption can be generated individually for every user to allow secure communication between the charging station and the mobile device.

In another embodiment of the method the optical signals are emitted via altering light patterns emitted by a plurality of via LEDs arranged in frame-like shape. This means a sequence of light patterns is emitted over time. The alteration of the light patterns can be utilized in two ways. In a first way the light patterns are used to dynamically provide the data from the charging station to the mobile device to a specific user. This is an easy and practical way to encode and transmit data. In second way the alteration of light patterns changes from user to user, which increases the security of the communication as different light patterns are used for different users. The use of different light patterns for different users can be coordinated between the mobile device and the charging station via near field or local communication.

The problem is also solved by a machine readable program code for a mobile device, esp. a smartphone, comprising control commands to receive and decode optical signals emitted from an optical communication interface of a charging station, further comprising control commands to transmit data derived from these optical signals to a vehicle connected with the mobile device. Preferably the data is automatically displayed on the user interface of data. The control commands can comprise commands which automatically establish a connection with the vehicle and transmit the data in an encrypted way to the vehicle. So the data is transmitted between the charging station and the vehicle encrypted. The user interface can also mirror the data displayed on a screen of the mobile device.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic representation of the system according to an embodiment of the invention,
Figure 2 an optical communication interface with a first set of optical signals,
Figure 3 an optical communication interface with a second set of optical signals,
Figure 4 a flow chart showing an exemplary embodiment of a method according to the invention.

In the figures like reference signs denote like elements unless stated otherwise.

### DETAILED DESCRIPTION OF THE DRAWINGS

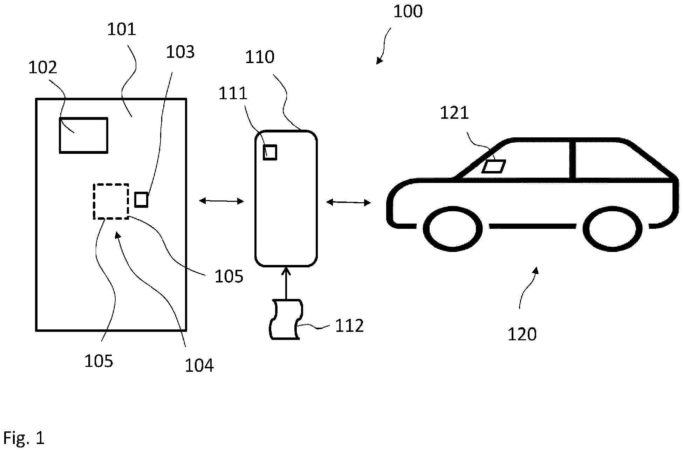

Figure 1 shows a system 100 for charging an electrically driven vehicle 120. The system 100 comprises a charging station 101 for charging such vehicle 120 . The charging station 101 is connected with a power grid and can provide electrical power to an energy storage of the electrically driven vehicle 120. The power connection, through which the vehicle 120 can also communicate with charging station 101 via a power cable, is not shown.

The charging station 101 further comprises a control unit 102. The control unit 102 is connected with a sensor 103 for near field communication. In Figure 1 the sensor 103 is a NFC sensor. When the NFC sensor 3 detects an NFC signal, the NFC sensor 103 provides this information to the control unit 102.

The control unit 102 is also connected to a optical communication interface 104, comprising a plurality of LEDs 105 emitting light in different colors, e.g. red, green and blue. The LEDs 105 can be controlled individually by the control unit 102. The plurality of LEDs 105 are arranged in a frame-like shape. According to Figure 1 the plurality of LEDs 105 form together a circumference of a rectangle, i.e. comprises four linear sections which form together the rectangle.

Each LED 105 of the optical communication interface 104 is controllable via the control unit 102, which is connected to the optical communication interface 104. The control unit 102 is configured to provide data via the optical communication interface 104 in form of optical signals via the LEDs 105, i.e. different and changing light patterns, through which the data is transmitted. The data can be technical data regarding the charging process, payment data for the charging process, identification data, scheduling information for the charging station, or other information of potential relevance for the user. The respective data is retrieved from a storage by the control unit 102 and transformed to control signals on which the emitted optical signals are based.

In case a user approaches a charging station 101, the NFC sensor 103 detects a near field signal provided from a mobile device 110, e.g. a smartphone. Based on the detection of the detected NFC signal, the optical communication interface 104 is activated.

The optical signals comprising the data to be transmitted can be received by a mobile device 110 which is configured to detect and read these optical signals. The optical signals emitted by the optical communication interface 104 comprise dynamic light patterns, i.e. the LEDs 105 comprised by the optical communication interface 104 are controlled such to emit different local or regional lighting patterns along the sections of the framelike-shaped LED arrangement. This local or regional lighting patterns can also comprise different colors for the respective section. The lighting patterns of all sections from together the lighting pattern of the optical communication interface 104-

The mobile device 110, e.g. a smart phone, comprises a detector 111, e.g. a camera, to detect the optical signals emitted from the optical communication interface 104 of the charging station 101. In addition the mobile device 110 comprises program code 112 comprising control commands enabling the mobile device 110 to decode the optical signals und derive the underlying data. This program code 112 can be a software application for a smart phone.

After the mobile device 110 has derived the data from the optical signals, the data is provided to the vehicle 120. The vehicle 120 is typically the vehicle that is intended to be charged or that has been charged by the charging station 101. The vehicle 120 can be connected with the mobile device 110. Typically this can be realized by a wireless connection e.g. Bluetooth.

In case the mobile device 110 and the vehicle 120 are not connected, the mobile device 110 will connect to the vehicle 120. The mobile phone 110 can request the vehicle 120 to establish a connection to transfer data from the charging station 101. After the connection is established the data is transmitted to the vehicle 120. The data can be transmitted encrypted from the mobile device 110 and the vehicle 120 for security reasons.

The vehicle 120 comprises a user interface 121 through which the vehicle 120 communicates with the user. Typically this user interface 121 is located in a user cabin of a vehicle. This user interface 121 can be typically used for multi-media application, navigation, control of the vehicle status or other purposes. Typically, this user interface comprises a display to provide data visually to the user, e.g. a LCD or LED display or a head-up display.

At least one of the available displays is used to provide the data transmitted by the charging station 101 via the optical communication interface 104. For this reason the vehicle 120 is configured - if receiving respective data from the mobile device 110 - to automatically display the data on the user interface 121. The user is then able to read the data and start actions based on this provided information.

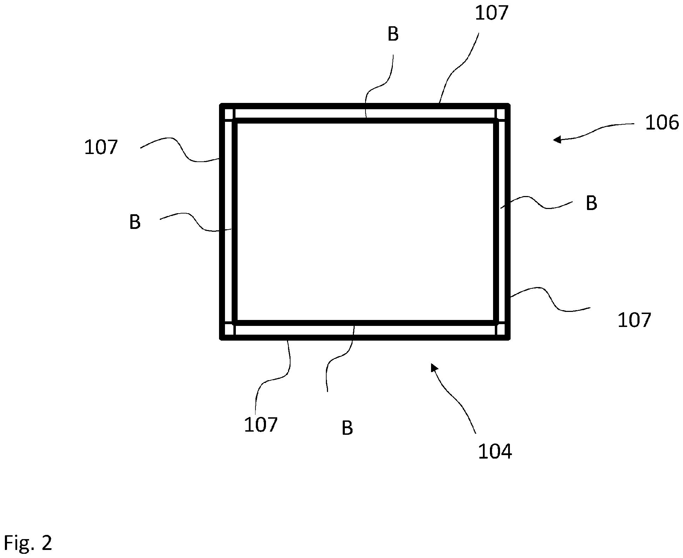

Figure 2 shows schematic representation of an exemplary optical communication interface 104. The optical communication interface 104 comprises a plurality of LEDs 105. The LEDs 105 are arranged in a frame-like shape 106 which has a rectangular form with four sections 107. Frame-like shape in rectangular form can also be understood as a closed ring-like structure, whereas a width of the ring-like structure is at least 5 times smaller than the distance of the sections 107 opposed to each other. The closed ring-like like structure can comprise corners, like in a rectangular or quadratic form or can have rounded a form without corners, e.g. a circle form or an elliptical form. The areas in which the different sections 107 touch or overlap can be left free of LEDs 105, e.g. in case of four section 107 which form together a rectangle or quadrat.

Each section 107 comprises a plurality of green, red and blue LEDs 105, which together can provide varying light patterns in different colors along the sections 107 dependent on the control signals received from the control unit.

The sections 107 can be continuously lighted in different colors along their length axis, e.g. in a green G light, a red R light or in a blue B light. Each local part of each section 107 can be lighted in a different color. E.g. LEDs 105 for emitting different light colors are arranged next to each other orthogonal to the length direction of the respective section 107. LEDs 105 of different colors can also be grouped in a point-like structures, whereas the spot-like structure comprises one LED 105 of each color. Such spot-like structure are controlled such that none or only one of the LEDs can be switched on at the same time.

The LEDs 105 can generate arbitrary light and color patterns along the sections 107 encoding the data to be transmitted via the optical signals. For this reason the LEDs 105 of the sections 107 can be activated or deactivated individually or grouped in a controlled manner, especially over time, as given by the control signals of the control unit.

Figure 2 shows an exemplary light pattern of the optical communication interface 104 where all LEDs 105 of all sections 107 are lighted in the color blue B. This can be e.g. the lighting pattern as soon as the optical communication interface 104 is activated after a NFC signals has been detected by the charging station.

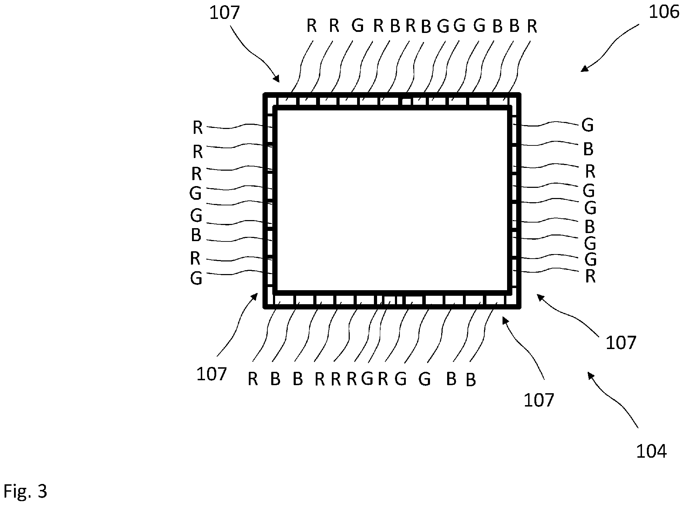

Figure 3 shows the optical communication interface 104 of Figure 2, whereas the plurality of LEDs 105 emit light of different colors, green G, blue B and red R, along the sections 107. This means the control unit provided respective control signals that this light pattern is generated. Together the lighted LEDs 105 form a light pattern or a sequence of different light patterns over time that provide data to the user as optical signals via the optical communication interface 104.

The lighting pattern can be static. Alternatively the lighting pattern can by altering or dynamic, i.e. changes over time when the optical communication interface 104 is operated for a respective user. This means a sequence of light patterns can be provided over time encoding the data to be transmitted to the mobile device. These light patterns can be repeated after a certain amount of time. By pointing the detector of the mobile device to the optical communication interface 104, the optical signals can be received and decoded by the mobile device.

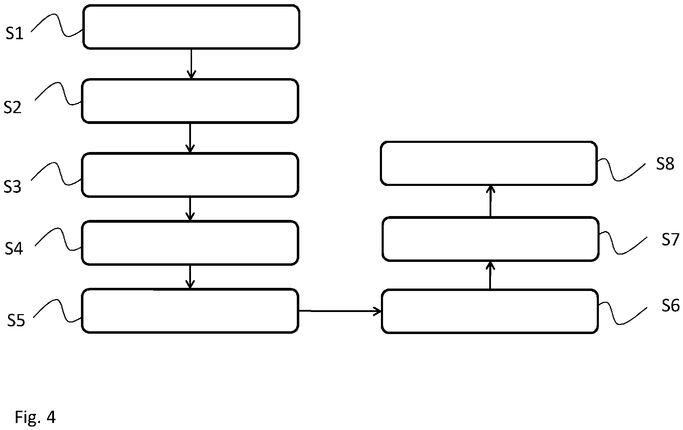

Figure 4 shows an exemplary flow chart of method for operating a system according to Figure 1 for transferring data from a charging station without a display screen to a user vehicle being part of a charging process at the charging station.

In a first step S1 a NFC sensor of a charging station receives a NFC signal of a mobile device and provides this information to the control unit. This means a mobile device of a user is close to the charging station and can be used to detect the optical signals emitted by the LEDs of the optical communication interface.

In a second step S2 the control unit activates the optical communication interface. To show that the optical communication interface will start to emit information to the user, the optical information is lighted in a uniform color, e.g. blue, as shown in Figure 2.

In a third step S3 the control unit provides data encoding control signals to the optical communication interface to emit optical signals which represent the data that shall be provided to the user. This control signals provide the data in an encrypted way to establish a data privacy for the user. The encryption key between the mobile device and the charging station can be shared via NFC signals, to wake up the optical communication interface. It can then be used by the control unit to encrypt the data.

In a fourth step S4 the optical signals are emitted by the optical communication interface according to the control signals provided by the control unit.

In fifth step S5 the optical signals are detected with the detector of the mobile device, e.g. a camera of the smart phone. In a step six S6 the mobile device then decodes the data provided by the optical signals and decrypts the data. The data is then present on the mobile device.

In a next step S7 the data is provided, preferably encrypted, to the vehicle, in a wireless way. In this context a wireless connection is established between the mobile device and the vehicle, if not present yet.

In a further step S8 the data received by the vehicle is provided via a user interface of the vehicle to the user, typically by displaying the data on a display or projecting the data to a projection surface, e.g. a screen. The data can be also provided audially.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present disclosure provides a machine readable program code 112 for a mobile device 110, a method for transferring data from a charging station to a vehicle and a system 100 for charging an energy storage of an electrically driven vehicle, comprising a charging station 101 without a display screen for suppling power to the energy storage comprising an optical communication interface 104 and a control unit 102, whereas the optical communication interface 104 comprises a plurality of LEDs 105, whereas the plurality of LEDs 105 are controllable via the control unit 102, whereas the control unit 102 is configured to provide data encoding control signals to the optical communication interface 104, whereas the optical communication interface 104 is configured to emit optical signals via the LEDs 105 based on the received control signals, further comprising a mobile device 110 with a detector 111 to detect the optical signals, comprising program code 112 enabling the mobile device 110 to receive and decode the optical signals to derive the underlying data, whereas the mobile device 110 is connectable with the electrically driven vehicle 120, whereas the mobile device 110 is configured to transmit the derived data to the vehicle 120 connected to the mobile device 110, and further comprising the vehicle 120 configured to provide the received data via a user interface 121 of the vehicle 120, especially on a display or a screen.

### LIST OF REFERENCE SIGNS

- 100: System
- 101: Charging station
- 102: Control unit
- 103: NFC Sensor
- 104: Optical communication interface
- 105: LED
- 106: Frame-like shape
- 107: Section

- 110: Mobile device: smartphone
- 111: Camera
- 112: Program code

- 120: vehicle
- 121: user interface: display

- S1: Receiving a NFC Signal by the charging station of the mobile device
- S2: Activating the optical communication interface
- S3: Providing data encoding control signals to the optical communication interface
- S4: Emitting optical signals by the optical communication interface
- S5: Receiving the optical signals by the detector of the mobile device
- S6: Decrypting and Decoding the optical signals
- S7: Transmit the data to the vehicle
- S8: Display the data provided from the charging station on a user interface, display, of the vehicle.

- R: Red
- G: Green
- B: Blue

## Claims

1. System (100) for charging an energy storage of an electrically driven vehicle, comprising
- a charging station (101) without a display screen for suppling power to the energy storage comprising an optical communication interface (104) and a control unit (102), whereas the optical communication interface (104) comprises a plurality of LEDs (105), whereas the plurality of LEDs (105) are controllable via the control unit (102), whereas the control unit (102) is configured to provide data encoding control signals to the optical communication interface (104), whereas the optical communication interface (104) is configured to emit optical signals via the LEDs (105) based on the received control signals,
- a mobile device (110) with a detector (111) to detect the optical signals, comprising program code (112) enabling the mobile device (110) to receive and decode the optical signals to derive the underlying data, whereas the mobile device (110) is connectable with the electrically driven vehicle (120), whereas the mobile device (110) is configured to transmit the derived data to the vehicle (120) connected to the mobile device (110), and
- the vehicle (120) configured to provide the received data via a user interface (121) of the vehicle (120), especially on a display or a screen.

2. System according claim 1,
whereas the plurality of LEDs (105) are arranged in a frame-like shape (106).

3. System according claim 2,
whereas the frame-like shape (106) is a rectangular shape comprising linear sections (107), whereas each section (107) comprises a plurality of LEDs (105).

4. System according to one of the preceding claims,
whereas the plurality of LEDs (105), especially in each section (107), comprises a plurality of green (G) lighting, a plurality of red (R) lighting and a plurality of blue (B) lighting LEDs (105).

5. System according to one of the preceding claims,
whereas the control unit (102) is configured to provide data in form of optical signals by generating altering LED (105) light patterns on the optical communication system, especially on the frame-like shaped LED (105) arrangement.

6. System according to one of the preceding claims,
whereas the control unit (102) is configured to activate the optical communication interface (104), if a presence of a mobile device (110) or a user is detected.

7. System according to one of the preceding claims,
whereas the optical communication interface (104) is activated by a near field signal of the mobile device (110) received by the charging station (101), especially a sensor (103) comprised by the charging station (101) to detect near field signals.

8. System according to one of the preceding claims,
whereas the mobile device(110) is configured to transmit the data wirelessly, especially via Bluetooth, to the vehicle (120).

9. System according to one of the preceding claims,
whereas the control unit (102) is configured to encrypt the data to be transmitted via the optical signals whereas the mobile device (110) is configured to decrypt received optical signals, especially before transmitting the data to the vehicle (120).

10. System according to one of the preceding claims,
whereas the mobile device (110) is a smartphone (110) whereas the optical signals are received via a camera (111) of the smart phone (110).

11. Method for transferring data from a charging station (101) without a display screen to a user vehicle (120) being part of a charging process at the charging station (101), whereas a control unit (102) of the charging station (101) provides data encoding control signals to an optical communication interface (104), (S3) comprising a plurality of LEDs (105), whereas the optical communication interface (104) emits optical signals via the LEDs (105) based on the received control signals from the control unit (102) (S4), whereas a mobile device (110) receives the optical signals and decodes the optical signals to derive the data (S5, S6), whereas the data is transmitted from the mobile device (110) to the vehicle (120) of the user (S7), whereas the data is provided via an user interface (121) of the vehicle (120) (S8).

12. Method according claim 11,
whereas the data encoding control signals are encrypted via an encryption algorithm, and the received encrypted optical signals are decrypted by the mobile device (110) applying a corresponding decryption algorithm (S6).

13. Method according claim 11 or 12,
whereas the optical signals are emitted via altering light patterns emitted by a plurality of via LEDs (105) arranged in a frame-like shape (106) (S4).

14. Machine readable program code (112) for a mobile device (110), esp. a smartphone, comprising control commands to receive and decode optical signals emitted from an optical communication interface (104) comprised by a charging station (101), further comprising control commands to transmit data derived from these optical signals to a vehicle (120) connected with the mobile device (110).
